# EUROPEAN PATENT APPLICATION

(11) **EP 3 177 065 A1**
(43) Date of publication of application: **07.06.2017**
(21) Application number: 15836837.3
(22) Date of filing: 26.06.2015
(51) Int. Cl.: H04W 28/04

(54) **DATA TRANSMISSION METHOD AND BASE STATION**

(30) Priority: 26.08.2014 CN 201410425383
(71) Applicant: Huawei Technologies Co., Ltd., Longgang District Shenzhen, Guangdong 518129 (CN)
(72) Inventor: QUAN, Wei, Shenzen Guangdong 518129 (CN); ZHANG, Dandan, Shenzen Guangdong 518129 (CN); ZHANG, Jian, Shenzen Guangdong 518129 (CN); LI, Bingzhao, Shenzen Guangdong 518129 (CN)
(74) Representative: Gill Jennings & Every LLP
(86) International application number: PCT/CN2015/082475
(87) International publication number: WO 2016/029737

(57) **Abstract**

Embodiments of the present invention disclose a data transmission method and a base station, so as to resolve a collision problem in a data transmission process in a scenario in which different processing latencies coexist. The method in the embodiments of the present invention includes: receiving, by a base station, a quality of service QoS parameter of at least one service, where the QoS parameter includes any one or a combination of at least two of: latency sensitivity, a resorting indication parameter, an RTT indication parameter, or a TTI indication parameter; the latency sensitivity is used to indicate different latency requirements of various types of data in the at least one service; and the resorting indication parameter is used to indicate whether an order between the various types of data in the at least one service needs to be rescheduled; configuring, by the base station, a radio bearer according to the QoS parameter; and transmitting the data according to the configured radio bearer.

## Description

This application claims priority to Chinese Patent Application No.201410425383.7, filed with the Chinese Patent Office on August 26, 2014 and entitled "DATA TRANSMISSION METHOD AND BASE STATION", which is incorporated herein by reference in its entirety.

### TECHNICAL FIELD

The present invention relates to the communications field, and in particular, to a data transmission method and a base station.

### BACKGROUND

Currently, in a Long Term Evolution (LTE, Long Term Evolution) system and an LTE-A (LTE, Long Term Evolution-Advanced) Long Term Evolution Advanced system, some parameters are used to indicate a quality of service (QoS, Quality of Service) requirement of a service, such as a latency, a packet loss rate, and a service processing priority. A radio network performs transmission processing on related data according to values of these parameters.

A latency is a key performance indicator that is used to measure performance of a communications system and affects user experience. Therefore, how to reduce a data transmission latency is a constant concern and an optimization objective in the communications system.

Currently, in LTE and LTE-A systems, a 10 ms radio frame structure and a 1 ms sub-frame are designed, that is, one radio frame includes 10 sub-frames.

In LTE and LTE-A systems, duration of a transmission time interval (TTI, transmission time interval) is 1 ms, that is, a length of one sub-frame; and duration of round-trip time (RTT, Round-Trip Time) is 8 ms, that is, occurrence of one retransmission causes a latency of 8 ms.

In an actual application, with advancement of hardware technologies, data processing speeds of a base station and a mobile terminal are gradually increased. Therefore, a TTI and an RTT are reduced accordingly. In addition, communications services are continuously diversified, different services have different latency requirements, and some services have a stricter latency requirement. Current technologies cannot well meet the latency requirements.

In addition, one consequence of service diversification is as follows: Even in a same service, there may be packets with different latency requirements. For example, in web browsing, text information, picture information, video information, and the like are included, and each type of information has a different latency requirement. Therefore, an existing parameter that indicates a QoS requirement of a service cannot well adapt to future service development.

### SUMMARY

Embodiments of the present invention provide a data transmission method and a base station, so as to resolve a collision problem in a data transmission process in a scenario in which different processing latencies coexist.

A base station provided in a first aspect of the embodiments of the present invention includes:
a receiving unit, configured to receive a quality of service QoS parameter of at least one service, where the QoS parameter includes any one or a combination of at least two of: latency sensitivity, a resorting indication parameter, an RTT indication parameter, or a TTI indication parameter; the latency sensitivity is used to indicate different latency requirements of various types of data in the at least one service; the resorting indication parameter is used to indicate whether an order between the various types of data in the at least one service needs to be rescheduled; the RTT indication parameter indicates a requirement of the at least one service for an RTT length of the base station; and the TTI indication parameter indicates a requirement of the at least one service for a TTI length of the base station;
a configuration unit, configured to configure a radio bearer according to the QoS parameter; and
a transmission unit, configured to transmit the data according to the configured radio bearer.

In a first possible implementation manner of the first aspect, if the QoS parameter includes the latency sensitivity, the configuration unit specifically performs any one or at least two of the following steps:
configuring reliability for one retransmission of the data;
configuring a quantity of retransmissions of the data; and
configuring a Radio Link Control protocol RLC mode used by the data.

With reference to the first possible implementation manner of the first aspect, in a second possible implementation manner of the first aspect, the transmission unit is further configured to:
after the radio bearer is configured according to the QoS parameter, send, to user equipment, radio bearer configuration information obtained by configuring the radio bearer, so that the user equipment transmits data according to the radio configuration parameter.

With reference to any one of the first aspect, or the first to the second possible implementation manners of the first aspect, in a third possible implementation manner of the first aspect, if the QoS parameter includes the resorting indication parameter, the configuration unit is specifically configured to:
schedule a transmission order of data of the at least one service according to the resorting indication parameter.

With reference to the third possible implementation manner of the first aspect, in a fourth possible implementation manner of the first aspect, the resorting indication parameter includes any one or a combination of at least two of the following operations:
submitting data corresponding to the at least one service in an order after resorting; or
submitting data corresponding to the at least one service in an original order.

With reference to any one of the first aspect, or the first to the second possible implementation manners of the first aspect, in a fifth possible implementation manner of the first aspect, if the QoS parameter includes the RTT indication parameter, the transmission unit is specifically configured to:
when the base station performs a service indicated by the RTT indication parameter, transmit data of the service by using an RTT length indicated by the RTT indication parameter.

With reference to any one of the first aspect, or the first to the second possible implementation manners of the first aspect, in a sixth possible implementation manner of the first aspect, if the QoS parameter includes the TTI indication parameter, the transmission unit is specifically configured to:
when the base station performs a service indicated by the TTI indication parameter, transmit data of the service by using a TTI length indicated by the TTI indication parameter.

With reference to any one of the first aspect, or the first to the second possible implementation manners of the first aspect, in a seventh possible implementation manner of the first aspect, the receiving unit is specifically configured to:
receive, by using a radio access bearer setup message E-RAB SETUP REQUEST, a QoS parameter that is of the service and that is sent by a core network; or
receive, by using a radio access bearer modification message E-RAB MODIFY REQUEST, a QoS parameter that is of the service and that is sent by a core network; or
receive, by using an initial context setup request message INITIAL CONTEXT SETUP REQUEST, a QoS parameter that is of the service and that is sent by a core network; or
receive, by using a newly added IE in a handover request message HANDOVER REQUEST, a QoS parameter that is of the service and that is sent by a core network; or
receive, by using a dedicated message, a QoS parameter that is of the service and that is sent by a core network.

With reference to any one of the first aspect, or the first to the second possible implementation manners of the first aspect, in an eighth possible implementation manner of the first aspect, the receiving unit is specifically configured to:
receive a QoS parameter that is of the service and that is sent by a source base station when a cell handover occurs.

A data transmission method provided in a second aspect of the embodiments of the present invention includes:
receiving, by a base station, a quality of service QoS parameter of at least one service, where the QoS parameter includes any one or a combination of at least two of: latency sensitivity, a resorting indication parameter, an RTT indication parameter, or a TTI indication parameter; the latency sensitivity is used to indicate different latency requirements of various types of data in the at least one service; the resorting indication parameter is used to indicate whether an order between the various types of data in the at least one service needs to be rescheduled; the RTT indication parameter indicates a requirement of the at least one service for an RTT length of the base station; and the TTI indication parameter indicates a requirement of the at least one service for a TTI length of the base station; and
configuring, by the base station, a radio bearer according to the QoS parameter, and transmitting the data according to the configured radio bearer.

In a first possible implementation manner of the second aspect, if the QoS parameter includes the latency sensitivity, the configuring a radio bearer according to the QoS parameter includes any one or a combination of at least two of the following operations:
configuring reliability for one retransmission of the data;
configuring a quantity of retransmissions of the data; and
configuring a Radio Link Control protocol RLC mode used by the data.

With reference to the first possible implementation manner of the second aspect, in a second possible implementation manner of the second aspect, after the configuring, by the base station, a radio bearer according to the QoS parameter, the method includes:
sending, by the base station, to user equipment, radio bearer configuration information obtained by configuring the radio bearer, so that the user equipment transmits data according to the radio configuration parameter.

With reference to any one of the second aspect, or the first to the second possible implementation manners of the second aspect, in a third possible implementation manner of the second aspect, if the QoS parameter includes the resorting indication parameter, the configuring a radio bearer according to the QoS parameter includes:
scheduling a transmission order of data of the at least one service according to the resorting indication parameter.

With reference to the third possible implementation manner of the second aspect, in a fourth possible implementation manner of the second aspect, the resorting indication parameter includes any one or a combination of at least two of the following operations:
submitting data corresponding to the at least one service in an order after resorting; or
submitting data corresponding to the at least one service in an original order.

With reference to any one of the second aspect, or the first to the second possible implementation manners of the second aspect, in a fifth possible implementation manner of the second aspect, if the QoS parameter includes the RTT indication parameter, the configuring a radio bearer according to the QoS parameter includes:
when the base station performs a service indicated by the RTT indication parameter, transmitting data of the service by using an RTT length indicated by the RTT indication parameter.

With reference to any one of the second aspect, or the first to the second possible implementation manners of the second aspect, in a sixth possible implementation manner of the second aspect, if the QoS parameter includes the TTI indication parameter, the configuring a radio bearer according to the QoS parameter includes:
when the base station performs a service indicated by the TTI indication parameter, transmitting data of the service by using a TTI length indicated by the TTI indication parameter.

With reference to any one of the second aspect, or the first to the second possible implementation manners of the second aspect, in a seventh possible implementation manner of the second aspect, the receiving the QoS parameter of the service includes:
receiving, by using a radio access bearer setup message E-RAB SETUP REQUEST, a QoS parameter that is of the service and that is sent by a core network; or
receiving, by using a radio access bearer modification message E-RAB MODIFY REQUEST, a QoS parameter that is of the service and that is sent by a core network; or
receiving, by using an initial context setup request message INITIAL CONTEXT SETUP REQUEST, a QoS parameter that is of the service and that is sent by a core network; or
receiving, by using a newly added IE in a handover request message HANDOVER REQUEST, a QoS parameter that is of the service and that is sent by a core network; or
receiving, by using a dedicated message, a QoS parameter that is of the service and that is sent by a core network.

With reference to any one of the second aspect, or the first to the second possible implementation manners of the second aspect, in an eighth possible implementation manner of the second aspect, the receiving the QoS parameter of the service includes:
receiving a QoS parameter that is of the service and that is sent by a source base station when a cell handover occurs.

It can be learned from the foregoing technical solutions that the embodiments of the present invention have the following advantages:

In the embodiments of the present invention, a base station receives a quality of service QoS parameter that is of a service and that is sent by a core network. The QoS parameter includes any one or a combination of at least two of: latency sensitivity, a resorting indication parameter, an RTT indication parameter, or a TTI indication parameter; the base station configures a radio bearer according to the QoS parameter; and the base station transmits data according to the configured radio bearer, so that data transmission quality can adapt to latest TTI and RTT requirements of the service.

### BRIEF DESCRIPTION OF DRAWINGS

To describe the technical solutions in the embodiments of the present invention or in the prior art more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic flowchart of a data transmission method according to an embodiment of the present invention;
FIG. 2 is another schematic flowchart of a data transmission method according to an embodiment of the present invention;
FIG. 3 is a schematic structural diagram of a base station according to an embodiment of the present invention; and
FIG. 4 is a schematic structural diagram of a computer device based on a data transmission method according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

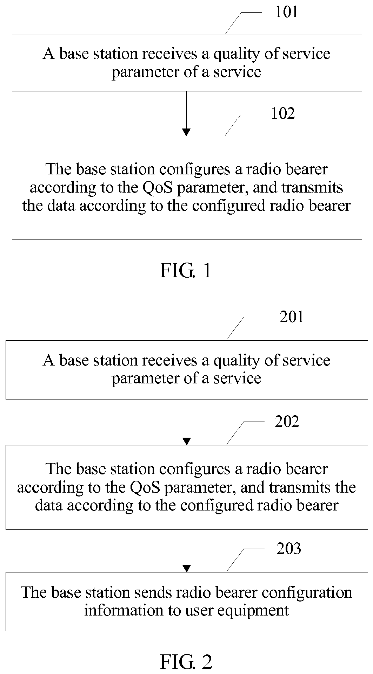

Referring to FIG. 1, an embodiment of a data transmission method in this embodiment of the present invention includes the following steps.

101. A base station receives a quality of service parameter of a service.

The base station receives a quality of service QoS parameter that is of the service and that is sent by a core network. The QoS parameter includes any one or a combination of at least two of: latency sensitivity, a resorting indication parameter, an RTT indication parameter, or a TTI indication parameter; the latency sensitivity is used to indicate different latency requirements of various types of data in the at least one service; the resorting indication parameter is used to indicate whether an order between the various types of data in the at least one service needs to be rescheduled; the RTT indication parameter indicates a requirement of the at least one service for an RTT length of the base station; and the TTI indication parameter indicates a requirement of the at least one service for a TTI length of the base station.

Specifically, the base station may receive the QoS parameter sent by the core network (for example, a mobility management entity). The base station may receive the QoS parameter in multiple manners, and no specific limitation is imposed herein.

102. The base station configures a radio bearer according to the QoS parameter, and transmits the data according to the configured radio bearer.

In this embodiment of the present invention, a base station receives a quality of service QoS parameter that is of a service and that is sent by a core network. The QoS parameter includes any one or a combination of at least two of: latency sensitivity, a resorting indication parameter, an RTT indication parameter, or a TTI indication parameter; the base station configures a radio bearer according to the QoS parameter; and the base station transmits data according to the configured radio bearer, so that data transmission quality can adapt to latest TTI and RTT requirements of the service.

Referring to FIG. 2, an embodiment of a data transmission method in this embodiment of the present invention includes the following steps.

201. A base station receives a quality of service parameter of a service.

The base station receives a quality of service QoS parameter that is of the service and that is sent by a core network. The QoS parameter includes any one or a combination of at least two of: latency sensitivity, a resorting indication parameter, an RTT indication parameter, or a TTI indication parameter; the latency sensitivity is used to indicate different latency requirements of various types of data in the at least one service; the resorting indication parameter is used to indicate whether an order between the various types of data in the at least one service needs to be rescheduled; the RTT indication parameter indicates a requirement of the at least one service for an RTT length of the base station; and the TTI indication parameter indicates a requirement of the at least one service for a TTI length of the base station.

Specifically, the base station may receive the QoS parameter sent by the core network (for example, a mobility management entity). The base station may receive the QoS parameter in multiple manners, for example:
receiving, by using a radio access bearer setup message (E-RAB SETUP REQUEST), a QoS parameter that is of the service and that is sent by a core network; or
receiving, by using a radio access bearer modification message (E-RAB MODIFY REQUEST), a QoS parameter that is of the service and that is sent by a core network; or
receiving, by using an initial context setup request message (INITIAL CONTEXT SETUP REQUEST), a QoS parameter that is of the service and that is sent by a core network; or
receiving, by using a newly added IE in a handover request message (HANDOVER REQUEST), a QoS parameter that is of the service and that is sent by a core network; or
receiving, by using a dedicated message, a QoS parameter that is of the service and that is sent by a core network.

It may be understood that the base station may further receive the QoS parameter in another manner, and no limitation is imposed herein.

Further, when a cell handover occurs, if a local base station is used as a target base station, a QoS parameter that is of the service and that is sent by a source base station may be received. Specifically, the source base station may send the QoS parameter of the service to the target base station by using a handover preparation message of an X2 interface or a handover request message of an S1 interface.

For example, in an actual application, the latency sensitivity may be a time range, for example, latency sensitivity of data included in a specific service is 10 ms to 100 ms, which indicates that latency requirements of some data in the service are 10 ms, latency requirements of some data are 100 ms, latency requirements of some data are 20 ms, or the like; or the latency sensitivity may be some discrete latency values, for example, 10 ms, 20 ms, or 100 ms. A specific implementation manner is determined according to an actual situation, and no limitation is imposed herein.

For example, in an actual application, because various types of data in a radio service may have different latency requirements, when transmission of some data is to expire, a network side may need to reschedule a transmission order of the various types of data, where the transmission order may be an order in which data is sent over an air interface, or an order in which data transmitted over an air interface is transmitted to an upper-layer network at a receive end, or a combination thereof. The resorting indication parameter is used to indicate whether the order between the various types of data in the at least one service needs to be rescheduled. Specifically, the resorting requirement may be specific to all data in an entire service, or may be specific to a specific piece of data or some data in the service.

For example, a type indicated by the resorting indication parameter may include any one or a combination of at least two of the following operations:
submitting data corresponding to the at least one service in an order after resorting; or
submitting data corresponding to the at least one service in an original order.

Specifically, the submission step may be actually transmission over an air interface.

For example, in an actual application, the TTI indication parameter may be indicated by using a specific time value, for example, 0.5 ms or 0.4 ms; or may be indicated by using an orthogonal frequency division multiplexing technology (OFDM, Orthogonal Frequency Division Multiplexing) symbol, for example, 7 or 6 OFDM symbols. The RTT indication parameter may be indicated by using a quantity of TTIs, for example, 4 or 8 TTIs; or may be indicated by using an OFDM symbol, for example, 14 or 20 OFDM symbols; or may be indicated by using a specific time value, for example, 5 ms or 4 ms.

202. The base station configures a radio bearer according to the QoS parameter, and transmits the data according to the configured radio bearer.

Specifically, the base station configures a corresponding radio bearer according to different QoS parameters, for example:
if the QoS parameter includes the latency sensitivity, the base station may perform any one or a combination of at least two of the following configuration operations according to the latency sensitivity: 1. configuring reliability for one transmission of the data; 2. configuring a quantity of retransmissions of the data; and 3. configuring a Radio Link Control protocol (RLC, Radio Link Control) mode used by the data, for example, service data that has a high latency requirement (a relatively low latency) may be configured to an RLC unacknowledged mode (UM, unacknowledged mode), or service data that has a low latency requirement (a relatively high latency) may be configured to an RLC acknowledged mode (AM, Acknowledged mode).

Specifically, if a type of data requires a relatively low latency, the base station may improve reliability for one transmission of the data; in addition, a quantity of retransmissions is configured for the data within the latency requirement to avoid invalid data retransmission.

If the QoS parameter includes the resorting indication parameter, the base station may schedule a transmission order of data of the at least one service according to the resorting indication parameter.

If the QoS parameter includes the RTT indication parameter, when performing a service indicated by the RTT indication parameter, the base station transmits data of the service by using an RTT length indicated by the RTT indication parameter.

If the QoS parameter includes the TTI indication parameter, when performing a service indicated by the TTI indication parameter, the base station transmits data of the service by using a TTI length indicated by the TTI indication parameter.

It may be understood that the RTT indication parameter may include at least one RTT length identifier.

It may be understood that the TTI indication parameter may include at least one TTI length identifier.

203. The base station sends radio bearer configuration information to user equipment.

The base station sends the radio bearer configuration information to the user equipment, where the radio bearer configuration information includes the foregoing radio bearer configuration parameter that is determined according to the QoS parameter. The user equipment receives the radio bearer configuration parameter that is of the service and that is sent by the base station, and transmits data according to the radio configuration parameter, so that data transmission quality can adapt to latest TTI and RTT requirements of the service.

The radio bearer configuration information includes any one or a combination of at least two of the following operations:
1. configuring reliability for one transmission of the data;
2. configuring a quantity of retransmissions of the data; and
3. configuring a Radio Link Control protocol mode used by the data, for example, service data that has a high latency requirement (a relatively low latency) may be configured to an RLC unacknowledged mode (UM, unacknowledged mode), or service data that has a low latency requirement (a relatively high latency) may be configured to an RLC acknowledged mode (AM, Ackknowledged mode).

Further, the radio bearer configuration information may further include:
an indication indicating whether the data is submitted to an upper layer in order;
an indication indicating whether the data is sent over an air interface in order;
an RTT indication parameter, where an RTT length indicated by the RTT indication parameter is used by the user equipment and the base station to transmit data of the service; or
a TTI indication parameter, where a TTI length indicated by the TTI indication parameter is used by the user equipment and the base station to transmit data of the service.

It may be understood that the RTT indication parameter may include at least one RTT length identifier.

It may be understood that the TTI indication parameter may include at least one TTI length identifier.

In this embodiment of the present invention, user equipment receives a radio bearer configuration parameter that is of a service and that is sent by a base station, and transmits data according to the radio configuration parameter, so that data transmission quality can adapt to latest TTI and RTT requirements of the service.

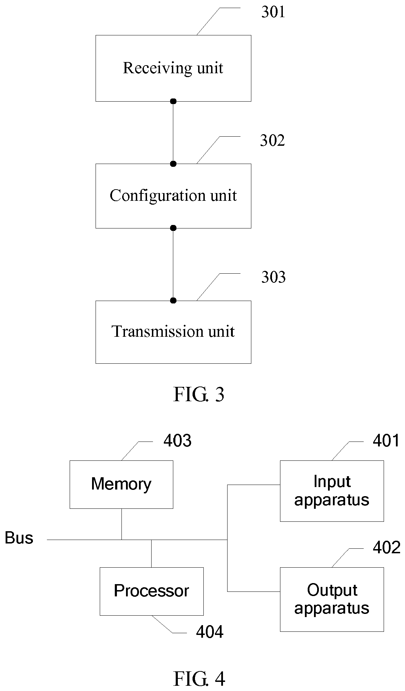

The following describes a base station for implementing the foregoing data transmission method. Referring to FIG. 3, an embodiment of the base station in this embodiment of the present invention includes:
a receiving unit 301, configured to receive a quality of service QoS parameter of at least one service, where the QoS parameter includes any one or a combination of at least two of: latency sensitivity, a resorting indication parameter, an RTT indication parameter, or a TTI indication parameter; the latency sensitivity is used to indicate different latency requirements of various types of data in the at least one service; the resorting indication parameter is used to indicate whether an order between the various types of data in the at least one service needs to be rescheduled; the RTT indication parameter indicates a requirement of the at least one service for an RTT length of the base station; and the TTI indication parameter indicates a requirement of the at least one service for a TTI length of the base station;
a configuration unit 302, configured to configure a radio bearer according to the QoS parameter; and
a transmission unit 303, configured to transmit the data according to the configured radio bearer.

Specifically, if the QoS parameter includes the latency sensitivity, the configuration unit 302 specifically performs any one or at least two of the following steps:
configuring reliability for one retransmission of the data;
configuring a quantity of retransmissions of the data; and
configuring a Radio Link Control protocol RLC mode used by the data.

Specifically, the transmission unit 303 is further configured to:
after the radio bearer is configured according to the QoS parameter, send, to user equipment, radio bearer configuration information obtained by configuring the radio bearer, so that the user equipment transmits data according to the radio configuration parameter.

Specifically, if the QoS parameter includes the resorting indication parameter, the configuration unit 302 is specifically configured to:
schedule a transmission order of data of the at least one service according to the resorting indication parameter.

Specifically, the resorting indication parameter includes any one or a combination of at least two of the following operations:
submitting data corresponding to the at least one service in an order after resorting; or
submitting data corresponding to the at least one service in an original order.

Specifically, if the QoS parameter includes the RTT indication parameter, the transmission unit 303 is specifically configured to:
when the base station performs a service indicated by the RTT indication parameter, transmit data of the service by using an RTT length indicated by the RTT indication parameter.

Specifically, if the QoS parameter includes the TTI indication parameter, the transmission unit 303 is specifically configured to:
when the base station performs a service indicated by the TTI indication parameter, transmit data of the service by using a TTI length indicated by the TTI indication parameter.

Specifically, the receiving unit 301 is specifically configured to:
receive, by using a radio access bearer setup message E-RAB SETUP REQUEST, a QoS parameter that is of the service and that is sent by a core network; or
receive, by using a radio access bearer modification message E-RAB MODIFY REQUEST, a QoS parameter that is of the service and that is sent by a core network; or
receive, by using an initial context setup request message INITIAL CONTEXT SETUP REQUEST, a QoS parameter that is of the service and that is sent by a core network; or
receive, by using a newly added IE in a handover request message HANDOVER REQUEST, a QoS parameter that is of the service and that is sent by a core network; or
receive, by using a dedicated message, a QoS parameter that is of the service and that is sent by a core network.

Further, the receiving unit 301 is further configured to:
receive a QoS parameter that is of the service and that is sent by a source base station when a cell handover occurs.

The following describes an operation process of the foregoing units.

The receiving unit 301 receives a quality of service QoS parameter that is of the service and that is sent by a core network. The QoS parameter includes any one or a combination of at least two of: latency sensitivity, a resorting indication parameter, an RTT indication parameter, or a TTI indication parameter; the latency sensitivity is used to indicate different latency requirements of various types of data in the at least one service; the resorting indication parameter is used to indicate whether an order between the various types of data in the at least one service needs to be rescheduled; the RTT indication parameter indicates a requirement of the at least one service for an RTT length of the base station; and the TTI indication parameter indicates a requirement of the at least one service for a TTI length of the base station.

Specifically, the base station may receive the QoS parameter sent by the core network (for example, a mobility management entity). The base station may receive the QoS parameter in multiple manners, for example:
receiving, by using a radio access bearer setup message (E-RAB SETUP REQUEST), a QoS parameter that is of the service and that is sent by a core network; or
receiving, by using a radio access bearer modification message (E-RAB MODIFY REQUEST), a QoS parameter that is of the service and that is sent by a core network; or
receiving, by using an initial context setup request message (INITIAL CONTEXT SETUP REQUEST), a QoS parameter that is of the service and that is sent by a core network; or
receiving, by using a newly added IE in a handover request message (HANDOVER REQUEST), a QoS parameter that is of the service and that is sent by a core network; or
receiving, by using a dedicated message, a QoS parameter that is of the service and that is sent by a core network.

It may be understood that the base station may further receive the QoS parameter in another manner, and no limitation is imposed herein.

Further, when a cell handover occurs, if a local base station is used as a target base station, a QoS parameter that is of the service and that is sent by a source base station may be received. Specifically, the source base station may send the QoS parameter of the service to the target base station by using a handover preparation message of an X2 interface or a handover request message of an S1 interface.

For example, in an actual application, the latency sensitivity may be a time range, for example, latency sensitivity of data included in a specific service is 10 ms to 100 ms, which indicates that latency requirements of some data in the service are 10 ms, latency requirements of some data are 100 ms, latency requirements of some data are 20 ms, or the like; or the latency sensitivity may be some discrete latency values, for example, 10 ms, 20 ms, or 100 ms. A specific implementation manner is determined according to an actual situation, and no limitation is imposed herein.

For example, in an actual application, because various types of data in a radio service may have different latency requirements, when transmission of some data is to expire, a network side may need to reschedule a transmission order of the various types of data, where the transmission order may be an order in which data is sent over an air interface, or an order in which data transmitted over an air interface is transmitted to an upper-layer network at a receive end, or a combination thereof. The resorting indication parameter is used to indicate whether the order between the various types of data in the at least one service needs to be rescheduled. Specifically, the resorting requirement may be specific to all data in an entire service, or may be specific to a specific piece of data or some data in the service.

For example, a type indicated by the resorting indication parameter may include any one or a combination of at least two of the following operations:
submitting data corresponding to the at least one service in an order after resorting; or
submitting data corresponding to the at least one service in an original order.

Specifically, the submission step may be actually transmission over an air interface.

For example, in an actual application, the TTI indication parameter may be indicated by using a specific time value, for example, 0.5 ms or 0.4 ms; or may be indicated by using an orthogonal frequency division multiplexing technology (OFDM, Orthogonal Frequency Division Multiplexing) symbol, for example, 7 or 6 OFDM symbols. The RTT indication parameter may be indicated by using a quantity of TTIs, for example, 4 or 8 TTIs; or may be indicated by using an OFDM symbol, for example, 14 or 20 OFDM symbols; or may be indicated by using a specific time value, for example, 5 ms or 4 ms.

The configuration unit 302 configures a corresponding radio bearer according to different QoS parameters, for example:
if the QoS parameter includes the latency sensitivity, the base station may perform any one or a combination of at least two of the following configuration operations according to the latency sensitivity: 1. configuring reliability for one transmission of the data; 2. configuring a quantity of retransmissions of the data; and 3. configuring a Radio Link Control protocol (RLC, Radio Link Control) mode used by the data, for example, service data that has a high latency requirement (a relatively low latency) may be configured to an RLC unacknowledged mode (UM, unacknowledged mode), or service data that has a low latency requirement (a relatively high latency) may be configured to an RLC acknowledged mode (AM, Ackknowledged mode).

Specifically, if a type of data requires a relatively low latency, the base station may improve reliability for one transmission of the data; in addition, a quantity of retransmissions is configured for the data within the latency requirement to avoid invalid data retransmission.

If the QoS parameter includes the resorting indication parameter, the base station may schedule a transmission order of data of the at least one service according to the resorting indication parameter.

If the QoS parameter includes the RTT indication parameter, when performing a service indicated by the RTT indication parameter, the base station transmits data of the service by using an RTT length indicated by the RTT indication parameter.

If the QoS parameter includes the TTI indication parameter, when performing a service indicated by the TTI indication parameter, the base station transmits data of the service by using a TTI length indicated by the TTI indication parameter.

It may be understood that the RTT indication parameter may include at least one RTT length identifier.

It may be understood that the TTI indication parameter may include at least one TTI length identifier.

The transmission unit 303 sends the radio bearer configuration information to the user equipment, where the radio bearer configuration information includes the foregoing radio bearer configuration parameter that is determined according to the QoS parameter. The user equipment receives the radio bearer configuration parameter that is of the service and that is sent by the base station, and transmits data according to the radio configuration parameter, so that data transmission quality can adapt to latest TTI and RTT requirements of the service.

The radio bearer configuration information includes any one or a combination of at least two of the following operations:
1. configuring reliability for one transmission of the data;
2. configuring a quantity of retransmissions of the data; and
3. configuring a Radio Link Control protocol mode used by the data, for example, service data that has a high latency requirement (a relatively low latency) may be configured to an RLC unacknowledged mode (UM, unacknowledged mode), or service data that has a low latency requirement (a relatively high latency) may be configured to an RLC acknowledged mode (AM, Ackknowledged mode).

Further, the radio bearer configuration information may further include:
an indication indicating whether the data is submitted to an upper layer in order;
an indication indicating whether the data is sent over an air interface in order;
an RTT indication parameter, where an RTT length indicated by the RTT indication parameter is used by the user equipment and the base station to transmit data of the service; or
a TTI indication parameter, where a TTI length indicated by the TTI indication parameter is used by the user equipment and the base station to transmit data of the service.

It may be understood that the RTT indication parameter may include at least one RTT length identifier.

It may be understood that the TTI indication parameter may include at least one TTI length identifier.

Referring to FIG. 4, an embodiment of the present invention further provides a base station, which may include:
an input apparatus 401, an output apparatus 402, a memory 403, and a processor 404 (there may be one or more processors in the base station, and one processor is used as an example in FIG. 4). In some embodiments of the present invention, the input apparatus 401, the output apparatus 402, the memory 403, and the processor 404 may be connected by using a bus or in another manner. A bus connection is used as an example in FIG. 4.

The base station receives a quality of service QoS parameter of at least one service.

The memory 403 performs the following step:
storing the QoS parameter, where the QoS parameter includes any one or a combination of at least two of: latency sensitivity, a resorting indication parameter, an RTT indication parameter, or a TTI indication parameter; the latency sensitivity is used to indicate different latency requirements of various types of data in the at least one service; the resorting indication parameter is used to indicate whether an order between the various types of data in the at least one service needs to be rescheduled; the RTT indication parameter indicates a requirement of the at least one service for an RTT length of the base station; and the TTI indication parameter indicates a requirement of the at least one service for a TTI length of the base station.

The processor 104 performs the following step:
configuring a radio bearer according to the QoS parameter.

The output apparatus 102 performs the following step:
transmitting the data according to the configured radio bearer.

Further, if the QoS parameter includes the latency sensitivity, the processor 104 performs any one or at least two of the following steps:
configuring reliability for one retransmission of the data;
configuring a quantity of retransmissions of the data; and
configuring a Radio Link Control protocol RLC mode used by the data.

Further, the output apparatus 102 is further configured to:
after the radio bearer is configured according to the QoS parameter, send, to user equipment, radio bearer configuration information obtained by configuring the radio bearer, so that the user equipment transmits data according to the radio configuration parameter.

If the QoS parameter includes the resorting indication parameter, schedule a transmission order of data of the at least one service according to the resorting indication parameter.

Specifically, the resorting indication parameter includes any one or a combination of at least two of the following operations:
submitting data corresponding to the at least one service in an order after resorting; or
submitting data corresponding to the at least one service in an original order.

If the QoS parameter includes the RTT indication parameter, the output apparatus 102 is specifically configured to:
when the base station performs a service indicated by the RTT indication parameter, transmit data of the service by using an RTT length indicated by the RTT indication parameter.

If the QoS parameter includes the TTI indication parameter, the output apparatus 102 is specifically configured to:
when the base station performs a service indicated by the TTI indication parameter, transmit data of the service by using a TTI length indicated by the TTI indication parameter.

Specifically, the input apparatus 401 is specifically configured to:
receive, by using a radio access bearer setup message E-RAB SETUP REQUEST, a QoS parameter that is of the service and that is sent by a core network; or
receive, by using a radio access bearer modification message E-RAB MODIFY REQUEST, a QoS parameter that is of the service and that is sent by a core network; or
receive, by using an initial context setup request message INITIAL CONTEXT SETUP REQUEST, a QoS parameter that is of the service and that is sent by a core network; or
receive, by using a newly added IE in a handover request message HANDOVER REQUEST, a QoS parameter that is of the service and that is sent by a core network; or
receive, by using a dedicated message, a QoS parameter that is of the service and that is sent by a core network.

For a detailed operation process of the foregoing base station, refer to the method embodiments, and details are not described herein.

In the several embodiments provided in this application, it should be understood that the disclosed apparatus and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, function units in the embodiments of the present invention may be integrated into one processing unit, or each of the units may exist alone physically, or two or more units are integrated into one unit. The integrated unit may be implemented in a form of hardware, or may be implemented in a form of a software function unit.

When the integrated unit is implemented in the form of a software function unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. Abase station, comprising:
a receiving unit, configured to receive a quality of service QoS parameter of at least one service, wherein the QoS parameter comprises any one or a combination of at least two of: latency sensitivity, a resorting indication parameter, an RTT indication parameter, or a TTI indication parameter; the latency sensitivity is used to indicate different latency requirements of various types of data in the at least one service; the resorting indication parameter is used to indicate whether an order between the various types of data in the at least one service needs to be rescheduled; the RTT indication parameter indicates a requirement of the at least one service for an RTT length of the base station; and the TTI indication parameter indicates a requirement of the at least one service for a TTI length of the base station;
a configuration unit, configured to configure a radio bearer according to the QoS parameter; and
a transmission unit, configured to transmit the data according to the configured radio bearer.

2. The base station according to claim 1, wherein if the QoS parameter comprises the latency sensitivity, the configuration unit specifically performs any one or at least two of the following steps:
configuring reliability for one retransmission of the data;
configuring a quantity of retransmissions of the data; and
configuring a Radio Link Control protocol RLC mode used by the data.

3. The base station according to claim 2, wherein the transmission unit is further configured to:
after the radio bearer is configured according to the QoS parameter, send, to user equipment, radio bearer configuration information obtained by configuring the radio bearer, so that the user equipment transmits data according to the radio configuration parameter.

4. The base station according to any one of claims 1 to 3, wherein if the QoS parameter comprises the resorting indication parameter, the configuration unit is specifically configured to:
schedule a transmission order of data of the at least one service according to the resorting indication parameter.

5. The base station according to claim 4, wherein the resorting indication parameter comprises any one or a combination of at least two of the following operations:
submitting data corresponding to the at least one service in an order after resorting; or
submitting data corresponding to the at least one service in an original order.

6. The base station according to any one of claims 1 to 3, wherein if the QoS parameter comprises the RTT indication parameter, the transmission unit is specifically configured to:
when the base station performs a service indicated by the RTT indication parameter, transmit data of the service by using an RTT length indicated by the RTT indication parameter.

7. The base station according to any one of claims 1 to 3, wherein if the QoS parameter comprises the TTI indication parameter, the transmission unit is specifically configured to:
when the base station performs a service indicated by the TTI indication parameter, transmit data of the service by using a TTI length indicated by the TTI indication parameter.

8. The base station according to any one of claims 1 to 3, wherein the receiving unit is specifically configured to:
receive, by using a radio access bearer setup message E-RAB SETUP REQUEST, a QoS parameter that is of the service and that is sent by a core network; or
receive, by using a radio access bearer modification message E-RAB MODIFY REQUEST, a QoS parameter that is of the service and that is sent by a core network; or
receive, by using an initial context setup request message INITIAL CONTEXT SETUP REQUEST, a QoS parameter that is of the service and that is sent by a core network; or
receive, by using a newly added IE in a handover request message HANDOVER REQUEST, a QoS parameter that is of the service and that is sent by a core network; or
receive, by using a dedicated message, a QoS parameter that is of the service and that is sent by a core network.

9. The base station according to any one of claims 1 to 3, wherein the receiving unit is specifically configured to:
receive a QoS parameter that is of the service and that is sent by a source base station when a cell handover occurs.

10. A data transmission method, comprising:
receiving, by a base station, a quality of service QoS parameter of at least one service, wherein the QoS parameter comprises any one or a combination of at least two of: latency sensitivity, a resorting indication parameter, an RTT indication parameter, or a TTI indication parameter; the latency sensitivity is used to indicate different latency requirements of various types of data in the at least one service; the resorting indication parameter is used to indicate whether an order between the various types of data in the at least one service needs to be rescheduled; the RTT indication parameter indicates a requirement of the at least one service for an RTT length of the base station; and the TTI indication parameter indicates a requirement of the at least one service for a TTI length of the base station; and
configuring, by the base station, a radio bearer according to the QoS parameter, and transmitting the data according to the configured radio bearer.

11. The method according to claim 10, wherein if the QoS parameter comprises the latency sensitivity, the configuring a radio bearer according to the QoS parameter comprises any one or a combination of at least two of the following operations:
configuring reliability for one retransmission of the data;
configuring a quantity of retransmissions of the data; and
configuring a Radio Link Control protocol RLC mode used by the data.

12. The method according to claim 11, wherein after the configuring, by the base station, a radio bearer according to the QoS parameter, the method comprises:
sending, by the base station, to user equipment, radio bearer configuration information obtained by configuring the radio bearer, so that the user equipment transmits data according to the radio configuration parameter.

13. The method according to any one of claims 10 to 12, wherein if the QoS parameter comprises the resorting indication parameter, the configuring a radio bearer according to the QoS parameter comprises:
scheduling a transmission order of data of the at least one service according to the resorting indication parameter.

14. The method according to claim 13, wherein the resorting indication parameter comprises any one or a combination of at least two of the following operations:
submitting data corresponding to the at least one service in an order after resorting; or
submitting data corresponding to the at least one service in an original order.

15. The method according to any one of claims 10 to 12, wherein if the QoS parameter comprises the RTT indication parameter, the configuring a radio bearer according to the QoS parameter comprises:
when the base station performs a service indicated by the RTT indication parameter, transmitting data of the service by using an RTT length indicated by the RTT indication parameter.

16. The method according to any one of claims 10 to 12, wherein if the QoS parameter comprises the TTI indication parameter, the configuring a radio bearer according to the QoS parameter comprises:
when the base station performs a service indicated by the TTI indication parameter, transmitting data of the service by using a TTI length indicated by the TTI indication parameter.

17. The method according to any one of claims 10 to 12, wherein the receiving the QoS parameter of the service comprises:
receiving, by using a radio access bearer setup message E-RAB SETUP REQUEST, a QoS parameter that is of the service and that is sent by a core network; or
receiving, by using a radio access bearer modification message E-RAB MODIFY REQUEST, a QoS parameter that is of the service and that is sent by a core network; or
receiving, by using an initial context setup request message INITIAL CONTEXT SETUP REQUEST, a QoS parameter that is of the service and that is sent by a core network; or
receiving, by using a newly added IE in a handover request message HANDOVER REQUEST, a QoS parameter that is of the service and that is sent by a core network; or
receiving, by using a dedicated message, a QoS parameter that is of the service and that is sent by a core network.

18. The method according to any one of claims 10 to 12, wherein the receiving the QoS parameter of the service comprises:
receiving a QoS parameter that is of the service and that is sent by a source base station when a cell handover occurs.
